# EUROPEAN PATENT SPECIFICATION

(11) **EP 2 042 369 B1**
(45) Date of publication and mention of the grant of the patent: **23.03.2016**
(21) Application number: 08168622.2
(22) Date of filing: 21.07.2005
(51) Int. Cl.: B60P 1/02, B60P 7/10, B60P 3/00

(54) **Transport apparatus**
Transportvorrichtung
Appareil de transport

(43) Date of publication of application: 01.04.2009
(62) Divisional of application: 05076687.2
(73) Proprietor: Van Huët Glastransport B.V., 6596 AB Milsbeek (NL)
(72) Inventor: Emons, Johannes Martinus Christian, 6596 AB, Milsbeek (NL)
(74) Representative: V.O.

(56) References cited:
- EP-A- 0 332 040
- DE-A1- 1 655 848
- DE-A1- 10 353 409
- FR-A- 2 804 388
- GB-A- 2 398 278
- US-A- 4 626 017
- US-B1- 6 905 095

## Description

The invention relates to a transport apparatus, for example to transport sheet material.

According to the invention, a transport apparatus is characterised by the features of claim 1.

It is known to transport frangible sheet material, for example large glass panels such as float glass having dimensions of about 6x3 m (for example 6.0x3.21 m), using trailers having substantially vertically extending A-frames or L-frames. A disadvantage of such trailers is, that their cargo space is used only half their operational life, namely during the transport runs from the glass factory to distributors. The cargo space will be typically empty on each return leg.

It has been suggested, to improve the usability of glass transport trailers by providing a support structure that can be folded to a stored condition by hand, see for example US 5,209,540. However, a disadvantage of this known trailer is its relatively complex and time-consuming handlability. Moreover, the folded support structure uses up relatively much space, which leads to a reduction of the overall cargo loading capacity of the trailer. US 5,209,540 further shows that a relatively thick layer of plastic material is located between the glass sheets and the support structure to reduce damage to the sheets. However, the utilisation of such a protective layer reduces operational efficiency and loading capacity.

DE10353409 discloses a trailer, having a base element that serves as a support for a load and is pivotably arranged on a holder via at least one height-adjustable hinge so that it can be moved from a horizontal position into a vertical position. The base element is provided with a retractable carrier arm having a support, for supporting metal plates.

The present invention aims to overcome or alleviate the above-mentioned problems. In particular, the present invention aims to provide a relatively inexpensive multi-functional transport apparatus having a large cargo capacity, both when transporting large glass panels as well as during transportation of different cargo, wherein the transport apparatus preferably can be handled with relative ease, for example by a single person, wherein the transport apparatus preferably can provide at least a safe transport of large glass panels.

In an aspect, a transport apparatus at least includes:
- a cargo space;
- at least one cargo support, wherein each cargo support is moveable between a first position wherein the support defines at least part of a floor of the cargo space, and a second position wherein the at least one support extends in the cargo space, spaced a certain vertical distance away from the level of said first position; and
- an actuation mechanism which is constructed to move the at least one cargo support between the first and second position.

For example, the transport apparatus can be, or can be at least part of. a vehicle, a truck and/or trailer.

When the at least one cargo support is in the first position, it defines at least part of a cargo floor. In that case, various types of cargo can be placed into cargo space, to be transported by the transport apparatus. Besides, the at least one cargo support can simply support at least part of the cargo.

When the actuation mechanism has moved the at least one support to its second position, the cargo support extends for example substantially vertically in the cargo space, spaced a certain vertical distance away from the level of said first position. Then, large panels, for example glass sheets, can be positioned next to said at least one cargo support, to be at least partly supported thereby during transport. Since the at least one cargo support is spaced a certain vertical distance away from the level of said first position, the cargo support can support cargo stably at a relatively high position in the cargo space. This is particularly advantageous when large frangible float glass panels are to be transported in the cargo space. Besides, the loading and unloading of sheet material can be achieved relatively fast with the apparatus according to the present invention.

In this patent application, the term "extending substantially vertically" has to be construed broadly, since this term can also mean "extending under some small angle with respect to a vertical plane".

Therefore, the at least one cargo support can provide a cargo support both in its first, usually substantially horizontal, position and in its second, for example substantially vertical, position. Thus, available space is used efficiently in both instances.

The actuation mechanism to move the at least one cargo support between the first and second position can be constructed in various ways. In one embodiment, this actuation mechanism comprises at least one frame which is moveable between a first position below the cargo space and a second position wherein at least part of the frame extends into the cargo space. The frame can hold the cargo support firmly in a desired position. Several of such frames can be provided to move and hold the at least one cargo support, for example a row of spaced-apart, elongated, moveable frames.

In an aspect, each moveable frame extends substantially parallel to a longitudinal direction of the cargo space when that frame is in the first position. In that case, the frame can be stored in a relatively small space below the cargo space, so that the transport apparatus can provide a relatively large, or an unrestricted, cargo space. Still, said moveable frame can be of a desired length to hold said cargo support at a desired height in the cargo space.

In a further embodiment, each said frame is simply pivotal, about a respective first pivot axis, between the respective first and second position. Also, the at least one cargo support can be pivotally connected, for example about a respective second pivot axis and an optional third pivot axis, to or near an end of said moveable frame. Thus, the moveable frame(s) and cargo support(s) can take up little space in their first positions, particularly measured in a transversal direction of the cargo space, whereas said cargo support can be brought to a relatively high second position by said moveable frame in a simple manner.

The space that can be required for the movements of the least one frame and cargo support, can be particularly compact for the case that the pivotal connection between said cargo support and said moveable frame is provided by a number of second pivot axes and a number of third pivot axis each said second pivot axis extending substantially parallel with respect to said first pivot axis and each third pivot axis extending substantially transversally with respect to said first pivot axis. Also, preferably, each said first pivot axis extends substantially transversally with respect to a longitudinal direction of the cargo space.

In an aspect, said actuation mechanism includes only one hydraulic piston/cylinder-assembly which is coupled to said at least one cargo support to move the support. In that case, the actuation mechanism can be relatively durable, easy to handle. As an example, the hydraulic piston/cylinder-assembly can simply be coupled to said cargo support via said optional, at least one moveable frame. In the latter case, the hydraulic piston/cylinder-assembly can be configured to move the at least one frame between its first and second position, wherein the movement of the frame preferably automatically results in the cargo support moving between its first and second position respectively.

In an embodiment, a lower end of the at least one cargo support extends at least 1 m above the level of said first position when that support is in its second position. In that case, the cargo support can reach relatively high positions, viewed from said first position of the cargo support, so that the cargo support can support relatively high cargo elements, for example glass panels, relatively stable. As an example only, a top end of the at least one support can be located at about 2-3 meters above said first position of the cargo support when that support is in its second position, depending on the dimensions of the support.

In an aspect, said at least one cargo support extends substantially parallel to a longitudinal direction of the cargo space when that support is in its second position. Thus, relatively lengthy cargo panels can be supported in the cargo space, which is particularly advantageous when the transport apparatus is at least part of a vehicle, a truck and/or trailer.

Also, at least part of said actuation mechanism can be covered by said cargo support when that support is in its first position, for example to protect that mechanism.

In an embodiment, the apparatus can comprise at least one moveable floor member, being moveable between a floor position and a substantially vertical position, wherein the floor member extends substantially transversally with respect to the longitudinal direction of the cargo space when that floor member is in said substantially vertical position. For example, such floor member can act as a stopping member for supporting cargo, said cargo support(s) and/or one or more parts of said actuation mechanism when that floor member is in its substantially vertical position. Also, said moveable floor member can cover at least part of said actuation mechanism when the at least one cargo support is in its first position. Such a moveable floor member does not necessarily have to be a said cargo support.

In a further embodiment, the apparatus includes a covering which is arranged to cover said cargo space, wherein the covering is preferably at least partly removable by hand by a single person. Such covering can be constructed in various ways, and include, for example, one or more doors, a removable covering sheet and/or a different type of covering.

Also, the apparatus can include pressing means for pressing cargo, for example float glass panels, towards said at least one cargo support when that support is in its second position, wherein the pressing means are preferably manually operable by a single person. Such pressing means can also be constructed in various ways, and include one or more pressing members of about 10-20 kg each that are controllable by tension ropes, and/or differently.

The present invention further provides the use of a transport apparatus according to the invention.

In an embodiment, during a first period of use the at least one cargo support has been moved to its second position to directly or indirectly support panel shaped cargo, for example float glass, wherein -during a second period of use- the at least one cargo support has been moved to its first position to provide a substantially horizontal cargo space floor to support cargo.

Therefore, the cargo space can be used optimally, wherein a large cargo space is available to transport cargo when the at least one cargo support is in its first position. Also, the invention provides a method for transporting cargo, for example float glass, using a transport apparatus according to the invention. This provides at least a number of the above-mentioned advantages.

Embodiments of the invention will now be described, by way of example only, with reference to the accompanying schematic drawings in which corresponding reference symbols indicate corresponding parts, and in which:
figure 1 schematically depicts a side view of an embodiment according to the invention;
figure 2 depicts part of the trailer of the embodiment of fig. 1;
figure 3 depicts a cross-section over line III-III of fig 2;
figure 4 depicts a perspective view of part of the trailer shown in fig. 2, wherein the support members are in the second position;
figure 5 is similar to figure 4 and shows the support members in the first position;
fig. 6 schematically depicts a cross-section of a further embodiment according to the invention, wherein the lifting members are in the lower position; and
fig. 7 is similar to fig. 6, showing the lifting members in an upper position.

Values accompanied by terms such as 'about', 'circa', 'substantially' or similar terms should at least be construed as meaning the range from the mentioned value minus 10% of that value to the mentioned value plus 10% of that value.

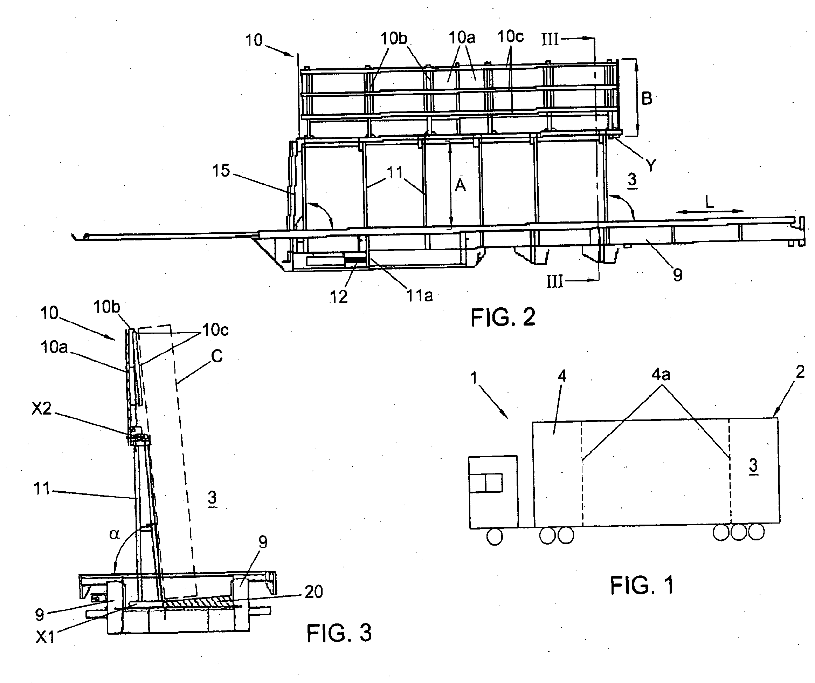

Figure 1 schematically shows a transport apparatus, for example to transport sheet material. The transport apparatus 1 includes a trailer 2, comprising a cargo space 3 and a base frame which includes two parallel longitudinal chassis bars 9. Details of the cargo space 3 are shown in figures 2-5. In the present embodiment, a storage space is provided between the two chassis bars 9, as will be explained below.

As is shown in fig. 1, the cargo space can be provided with a covering 4, for example, side walls and/or a roof, a tarpaulin, and/or the like. The cargo space 3 can be reached from the outside, for example, by removing or opening at least part the covering, for example via a door or side entrance which is schematically depicted with broken lines 4a. Preferably, the covering is at least partly removable by hand by a single person. In an alternative embodiment, the cargo space is not provided with a covering.

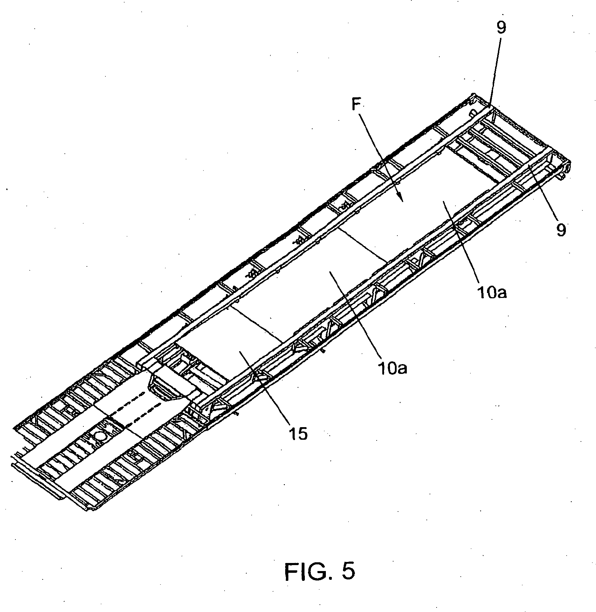

As is shown in figures 2 and 3, the transport apparatus includes cargo support members 10. Each support member 10 is moveable between a first position (shown in fig. 5) wherein part of the support member 10 defines at least part of a floor F of the cargo space 3, and a second position (shown in figures 2-4) wherein each support member 10 extends substantially vertically in the cargo space 3, spaced a certain vertical distance away from the level of said first position. In the present embodiment, the cargo support members 10 extend substantially parallel to a longitudinal direction of the cargo space when the support members are in their second positions (see figures 2-4).

Also, the transport apparatus 1 includes an actuation mechanism which is constructed to move the support members 10 automatically between the first and second position. Sheet-like cargo C, which is being supported in the cargo space 3, is schematically depicted in figure 3 by broken lines C. As is shown in fig. 5, in the present embodiment, the cargo support members 10 can extend substantially between the chassis bars 9 when the cargo support members are in the first position. In that case, the storage space between the chassis bars 9 is substantially covered by the support members 10. Preferably, the support members 10 can be supported directly by said base frame, for example by said longitudinal chassis bars 9, when the support members 10 are in the first position, to provide a sturdy cargo support. This can be achieved in various ways, for example by the chassis bars 9 having supporting grooves and/or supporting flanges to support parts of the support members 10.

The said cargo support members 10 can be arranged in various ways. In the present embodiment, the cargo support members are provided by floor parts 10a, which provide part of the cargo space floor F when the support members 10 are in the first position. The floor parts 10a are connected to a number of transversal support rods 10b. These transversal support rods are provided with longitudinal cargo support rods 10c, on sides faced away from the floor parts 10a. The longitudinal support rods 10c can function as cargo supports, for example to directly or indirectly support a side of a load of sheet cargo C when the cargo support members 10 are in the second position. Also, trailer 2 is provided with a number of lower support members 20, for example two, to support the underside of the sheet cargo C, when the cargo C is positioned substantially vertically, against the upwardly extending support member 10. In the present embodiment, said lower supports 20 are located on the bottom of the storage space between the chassis bars 9 (see fig. 3).

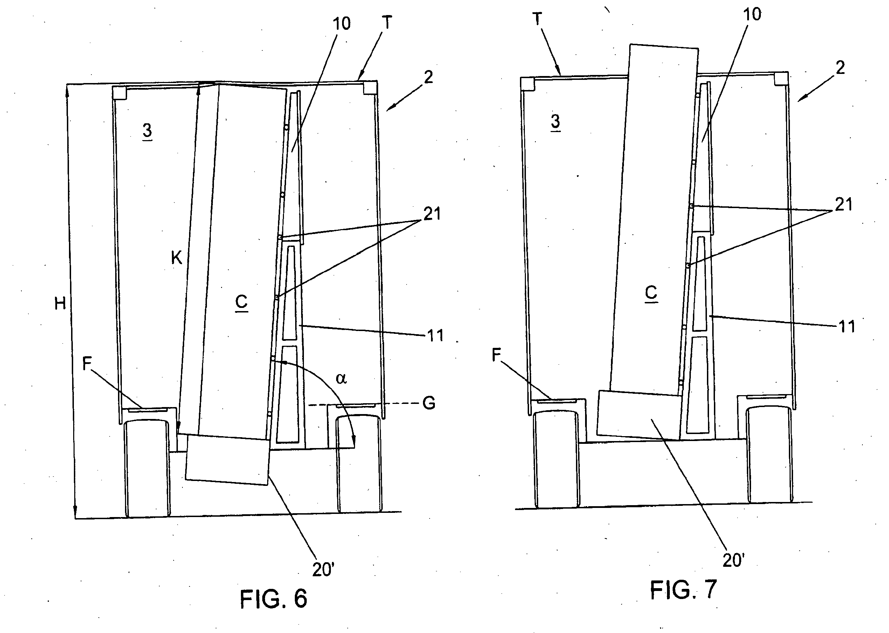

Preferably, the cargo supports, which include said cargo support members 10 and said lower cargo supports 20, are arranged to hold sheet-like cargo C substantially vertically, such, that a supported side of the cargo C, which is supported by said cargo support members 10 when in their second position, encloses an angles α with a horizontal plane in the range of about 80-90°, see fig. 3 or fig. 6. Preferably, the cargo support members 10 have cargo contacting/supporting surfaces that prevent damaging of the cargo C during use. To this aim, such supporting surfaces can include various materials and/of shapes, as will be clear to the skilled person. Also, as is indicated in the embodiment of Fig. 6-7, the cargo support members can be provided with cargo supporting wheels or rollers 21 or suchlike, which contact the cargo C during use. The cargo support members 10 can also be constructed differently. For example, the cargo support members 10 can be arranged to support the cargo directly, such as shown in the figures, or indirectly such as is the case when further intermediate supports (not shown) are placed between the cargo support members 10 and the cargo C after the cargo support members 10 have been moved to their respective second positions. Such intermediate supports can be arranged in various ways, for example as removable elongated supporting bars, and can also be provided with cargo supporting wheels or rollers.

In the present embodiment, said actuation mechanism comprises a plurality of elongated frames 11 that are moveable between a first position below the cargo space 3, where they extend in the storage space provided between the opposite sides of the chassis bars 9 , and a second position wherein the frames 11 extend substantially vertically into the cargo space 3. The frames 11 are spaced-apart from each other, and they are arranged in a row. The frames 11 can be moveably coupled, for example, to said trailer base frame. In fig. 5, the elongated frames 11 are in their first positions, whereas the second position of the frames is shown in figures 2-4. Preferably, in their second positions, the frames 11 can also provide cargo support surfaces which can support a side of sheet-like cargo C, as is depicted in fig. 3. For example, to this aim, the respective support surfaces of the moveable frames 11 and the support surfaces of the longitudinal rods 10c of the supports members 10 preferably extend in the same substantially vertical plane, or in line with each other. In the present embodiment, at least part of said actuation mechanism, which includes a number of said elongated frames 11, is being covered by said support members 10 when the support members 10 are in their first positions.

Each moveable frame 11 can be constructed in various ways, as will be clear to the skilled person. For example, each frame can include two longitudinal frame rods and a number of transversal interconnecting frame rods. In the present embodiment, each moveable elongated frame 11 extends substantially parallel to longitudinal directions L of the cargo space 3 when that frame 11 is in the first position. Also, in the present embodiment, each said elongated frame 11 is pivotal, about a respective first pivot axis X1, between the respective first and second position. Each first pivot axis X1 is transversal to the longitudinal direction L of the cargo space (see figs. 2 and 3).

Besides, in the present embodiment. said support members 10 are pivotally connected, about respective second pivot axes X2 and third pivot axes Y, to the distal ends of said moveable frames 10. In the present embodiment, each said second pivot axis X2 extends substantially parallel with respect to the first pivot axes X1, and each said third pivot axis Y extends substantially transversally with respect to said first pivot axis X1 and second pivot axis X2.

The actuation mechanism can include, for example, a hydraulic piston/cylinder-assembly 12, preferably just one. This assembly 12 can be coupled to the support members 10, particularly via the elongated frames 11. During use, the piston/cylinder assembly 12 can swivel the elongated frames about the pivot axes X1 between their first and second positions, wherein the motion of these frames preferably automatically leads to the pivoting of the support members about the respective second and third pivot axes X2, Y. For example, a conversion mechanism can be provided to convert a piston/cylinder-movement into a pivoting movement of the elongated frames 11, and to pivot the support members 10 as a consequence of the pivoting motion of the elongated frames 11. To the skilled person, it will be clear how such a conversion mechanism can be arranged. As an example, such a conversion mechanism can include suitable motion conversion bars, stop members, gear transmissions, cam followers and/or similar or different means. In the present embodiment, the piston of the piston/cylinder-assembly 12 simply cooperates with a lower extended part 11a of one of the frames 11 to swivel the frames between the first and second positions. The actuation mechanism can also be constructed differently, and can include for example one or more electromotor driven spindles, gear mechanisms or by other mechanisms instead of hydraulic actuation means.

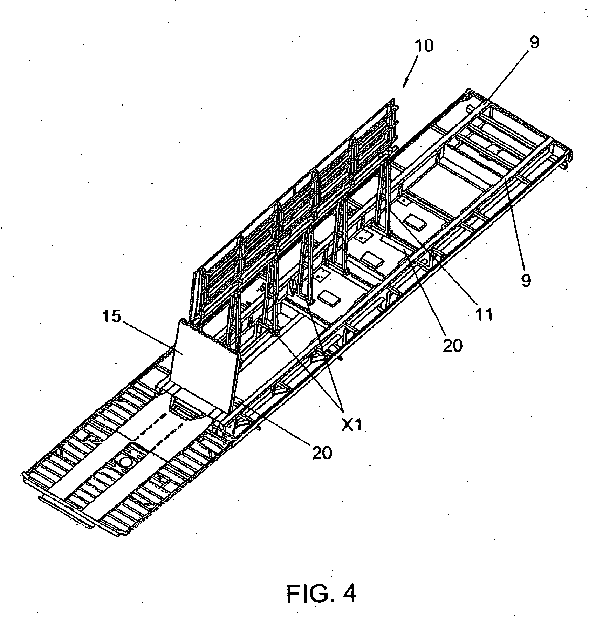

Also, the present trailer-embodiment comprises a moveable floor member 15 which can cover part of the actuation mechanism when the at least one cargo support member is in its first position. In the present embodiment, this moveable floor member 15 is arranged to cover a first elongated frame 11of the row of elongated moveable frames 11. As is shown in figures 2 and 4, said moveable floor member 15 can be moved to a substantially vertical position wherein the floor member extends substantially transversally with respect to the longitudinal direction of the cargo space. Preferably, said actuation mechanism is arranged to provide such a movement of the moveable floor member 15. In its substantially vertical position, the floor member 15 preferably acts as a stopping member for supporting the adjoining support member 10 and first elongated frame member 11, to provide a certain fixation of the support members 10 and elongated frame members 11. Also, preferably, in the substantial vertical position, the floor member 15 acts as a stopping member for stopping/supporting cargo such as large glass plates C.

Also, the transport apparatus can include pressing means for pressing cargo, for example float glass panels, towards the at least one support member when that member is in its second position, wherein the pressing means are preferably manually operable by a single person. Such pressing means are not shown in the figures.

The transport apparatus can have various dimensions. For the case that relatively large panels are the be transported in the cargo space, for examples panels of about 6 m long and 3 m wide, it is advantageous when the lower ends of the support members 10 extend at least 1 m above the level of said first position when the members 10 are in the second positions. This distance is shown in figure 2 by double arrow A. For example, this distance A can be about 1.5 or 1.6 m, or an other suitable distance. Also, preferably, the overall length of the support members, measured along the length of the cargo space, is at least about 5 or 6 m.

Besides, preferably, a horizontal width of the cargo space preferably is not larger than about 2 to 2.5 meters. Thus, the transport apparatus can be relatively compact.

As an example, the support members 10 can have a width B (see fig. 2) of no more than about 2 meters, measured in a transversal direction of the cargo space when the support members 10 are in their first positions. For example, the width B of the support members (or the distance between the two chassis bars 9) can be about 1.4-1.5 m.

Besides, as an example, the length of each of the elongated frames 11 can be in the range of about 1-2 meters. For example, each elongated frame 11 can have a length of about 1.9 to 2 m.

Also, the transport apparatus, or parts thereof, can be dimensioned differently.

During use, the support members 10 can be moved by the actuation mechanism 11, 12 to their second positions to provide a firm and steady support to panel shaped cargo C, for example float glass, which cargo C is placed onto the two lower supports 20. Preferably, in that case, a lower side of the cargo C can extend below the regular cargo space 3, namely in the compartment between the chassis bars 9 (see fig. 3). Besides, the support members 10 can be brought to the first positions to provide a substantially horizontal cargo space floor, and to support various types of cargo. In the latter case, the actuation mechanism, particularly, the elongated frames 11, can extend below the cargo space, between the chassis bars 9, and take up little space.

Figures 6 and 7 show a further embodiment of the invention. This embodiment differs from the embodiment shown in figures 1-5 in that the lower support members 20' are lifting supports, which are not only configured to support the underside of the sheet material cargo C, but also to lift the cargo C between various vertical positions. As is shown in figure 6, when the lifting support members 20' are in a lower position, a lower part of the cargo C can be located below the vertical level G of the regular cargo space floor F, for example at a position between trailer base frame parts, such as said chassis bars (not shown in fig. 6, 7). In this way, relatively high sheet material cargo C, having height K, can still be transported within the trailer 2, while the overall height H of the trailer 2 can be kept within certain practical limits. Also, in this way, trailer stability during transport can be improved due to a resulting relatively low centre of gravity. For example, the height K of the sheet material can be about 3 m, whereas the maximum height of the trailer H can be circa 4 m.

To facilitate handling of the cargo C, particularly during loading/unloading thereof, the cargo C can be lifted upwardly by the lifting supports 20', for example such that the lower part of the cargo C is located at or above the level G of the regular cargo space floor F, and/or such that the lower part of the cargo C is located at or above the trailer base frame. Figure 7 shows an upper position of the lifting support members 20'. The substantial vertical movement of these members 20' can be achieved in various ways, for example by one or more hydraulic actuators, spindle mechanism driven by one or more electric motors, or by other moving mechanisms. Rollers or wheels 21 are preferably provided as cargo supporting parts of the substantially vertically extending frames 11 and the support members 10, to allow a substantially friction free, or low friction, substantial vertical movement of the cargo along to the frames 11 and support members. It will be clear to the skilled person, that such rollers or wheels 21 can be arranged in various ways, and that they can be coupled in various ways to the frames 11 and/or support members 10, such as detachably or fixed.

In the present embodiment of Fig. 6, 7, when the lifting support members 20' are in the upper position, relatively high cargo C may extend partly above a top side T of the trailer 2. For example, the covering of the trailer can be at least partly removed to allow the cargo C to reach out of the trailer 2. When the lifting support members 20' are in the upper positions (Fig. 7), cargo can be removed therefrom, or be positioned therein, using suitable conveying means, for example a gripper, crane and/or the like. Such conveying means can reach the cargo C, for example, via a roof opening and/or side opening of the trailer covering.

While specific embodiments of the invention have been described above, it will be appreciated that the invention may be practiced otherwise than as described.

The descriptions above are intended to be illustrative, not limiting. Thus, it will be apparent to one skilled in the art that modifications may be made to the invention as described without departing from the scope of the claims set out below.

## Claims

1. A transport apparatus to transport sheet material in a substantially vertical position, the sheet material being float glass, the apparatus at least including a cargo space (3), and one or more supports (20') which are configured to support the underside of the sheet material (C), **characterised by** the one or more supports being one or more lifting supports (20'), which are configured to move the sheet material (C) between at least a first vertical position and a second vertical position, the first vertical position being a lower transport position and the second vertical position being an upper loading/unloading position.

2. The apparatus according to claim 1, wherein a lower part of the sheet material (C) is located below a vertical level (G) of a regular cargo space floor (F) of the cargo space, when the lifting supports (20'), supporting the underside of the sheet material (C), are in a lower position.

3. The apparatus according to claim 1 or 2, wherein a lower part of the sheet material (C) is located at a position between trailer base frame parts, for example chassis bars, when the lifting supports (20'), supporting the underside of the sheet material (C), are in a lower position.

4. The apparatus according to any of the preceding claims, wherein the lifting supports (20') are configured to lift the sheet material (C) upwardly.

5. The apparatus according to any of the preceding claims, wherein the substantial vertical movement of the lifting supports (20') can be achieved by one or more hydraulic actuators, a spindle mechanism driven by one or more electric motors, or by other moving mechanisms.

6. The apparatus according to any of the preceding claims, wherein a lower part of the cargo (C) is located at or above the level (G) of a regular cargo space floor (F), for example at or above a trailer base frame, when the lifting supports (20'), supporting the underside of the sheet material (C), are in an upper position.

7. The apparatus according to any of the preceding claims, including at least one cargo support (10) to support the sheet material in the cargo space (3), wherein the one or more lifting supports (20') are configured to support the underside of the sheet material (C) when that material is at least being supported at and/or near an upper by said at least one cargo support (10).

8. The apparatus according to claim 7, wherein the at least one cargo support (10) and the lifting supports (20') are arranged to hold sheet-like cargo (C) substantially vertically, such, that a supported side of the cargo (C), which is supported by said cargo supports (10). encloses an angle α with a horizontal plane in the range of about 80-90°.

9. The apparatus according to any of the claims 7-8, wherein the at least one cargo support (10) is provided with cargo supporting parts (21), which allow a substantially friction free, or low friction, substantial vertical movement of the sheet material along to the at least one cargo support (10).

10. The apparatus according to any of the claims 7-9, wherein the at least one cargo support (10) is spaced a certain vertical distance away from the level of a floor of the cargo space, to stably support sheet material at a relatively high position in the cargo space.

11. A transport apparatus according to any of the preceding claims, including a covering which is arranged to cover said cargo space, wherein the covering is preferably at least partly removable by hand by a single person.

12. Use of the apparatus according to any of claims 1-11, wherein, when the lifting supports (20') are in the upper position, sheet material (C) extends partly above a top side (T) of the trailer (2).

13. Use of the apparatus according to any of claims 1-11. wherein, when the lifting supports (20') are in the upper positions, sheet material is removed therefrom, or positioned therein, using suitable conveying means, for example a gripper, crane and/or the like, wherein the conveying means can reach the sheet material (C) via a roof opening and/or side opening of a trailer covering.

14. Use of the apparatus according to claim 11, wherein the covering of the trailer is at least partly removed to allow the sheet material (C) to reach out of the trailer (2).

15. Method for transporting float glass, using a transport apparatus according to any of claims 1-11.

## Patentansprüche

1. Transportvorrichtung zum Transportieren von Plattenmaterial, das Floatglas ist, in einer im Wesentlichen vertikalen Position, wobei die Vorrichtung mindestens einen Transportgutraum (3) und einen oder mehrere Stützen (20') umfasst, die konfiguriert sind, um die Unterseite des Plattenmaterials (C) zu stützen, **dadurch gekennzeichnet, dass** die eine oder mehreren Stützen ein oder mehrere Hebestützen (20') sind, die konfiguriert sind, das Plattenmaterial (C) zwischen mindestens einer ersten vertikalen Position und einer zweiten vertikalen Position zu bewegen, wobei die erste vertikale Position eine untere Transportposition ist und die zweite vertikale Position eine obere Be-/Entladeposition ist.

2. Vorrichtung nach Anspruch 1, wobei ein unterer Teil des Plattenmaterials (C) unter einer vertikalen Ebene (G) eines normalen Transportgutraumbodens (F) des Transportgutraums angeordnet ist, wenn die Hebestützen (20'), die die Unterseite des Plattenmaterials (C) stützen, in einer unteren Position sind.

3. Vorrichtung nach Anspruch 1 oder 2, wobei ein unterer Teil des Plattenmaterials (C) an einer Position zwischen Aufliegerbasisrahmenteilen, wie beispielsweise Gestellstangen, angeordnet ist, wenn die Hebestützen (20'), die die Unterseite des Plattenmaterials (C) stützen, in einer unteren Position sind.

4. Vorrichtung nach einem der vorhergehenden Ansprüche, wobei die Hebestützen (20') konfiguriert sind, um das Plattenmaterial (C) nach oben zu heben.

5. Vorrichtung nach einem der vorhergehenden Ansprüche, wobei die im Wesentlichen vertikale Bewegung der Hebestützen (20') durch ein oder mehrere hydraulische Betätigungselemente, einen Spindelmechanismus, angetrieben von einem oder mehreren Elektromotoren oder durch andere Bewegungsmechanismen bewerkstelligt werden kann.

6. Vorrichtung nach einem der vorhergehenden Ansprüche, wobei ein unterer Teil des Transportguts (C) an oder über der Ebene (G) eines normalen Transportgutraumbodens (F) angeordnet ist, beispielsweise an oder über einem Aufliegerbasisrahmen, wenn die Hebestützen (20'), die die Unterseite des Plattenmaterials (C) stützen, in einer oberen Position sind.

7. Vorrichtung nach einem der vorhergehenden Ansprüche, umfassend mindestens eine Transportgutstütze (10) zum Stützen des Plattenmaterials im Transportgutraum (3), wobei die eine oder mehreren Hebestützen (20') konfiguriert sind, die Unterseite des Plattenmaterials (C) zu stützen, wenn dieses Material zumindest an und/oder nahe einer oberen Position durch die mindestens eine Transportgutstütze (10) gestützt wird.

8. Vorrichtung nach Anspruch 7, wobei die mindestens eine Transportgutstütze (10) und die Hebestützen (20') angeordnet sind, plattenähnliches Transportgut (C) im Wesentlichen vertikal zu halten, sodass eine gestützte Seite des Transportguts (C), die von den Transportgutstützen (10) gestützt wird, einen Winkel α mit einer horizontalen Ebene im Bereich von ungefähr 80-90°C einschließt.

9. Vorrichtung nach einem der Ansprüche 7-8, wobei die mindestens eine Transportgutstütze (10) mit das Transportgut stützenden Teilen (21) versehen ist, die eine im Wesentlichen vertikale Bewegung, die im Wesentlichen keine oder nur eine geringe Reibung aufweist, des Plattenmaterials entlang der mindestens einen Transportgutstütze (10) ermöglicht.

10. Vorrichtung nach einem der Ansprüche 7-9, wobei die mindestens eine Transportgutstütze (10) in einem bestimmten vertikalen Abstand von der Ebene eines Bodens des Transportgutraums entfernt ist, um das Plattenmaterial an einer relativ hohen Position in dem Transportgutraum stabil zu stützen.

11. Transportvorrichtung nach einem der vorhergehenden Ansprüche, einschließlich einer Abdeckung, die angeordnet ist, um den Transportgutraum abzudecken, wobei die Abdeckung bevorzugt mindestens teilweise von Hand durch eine einzige Person entfernt werden kann.

12. Verwendung einer Vorrichtung nach einem der Ansprüche 1-11, wobei, wenn die Hebestützen (20') in der oberen Position sind, das Plattenmaterial (C) sich teilweise über eine Oberseite (T) des Aufliegers (2) erstreckt.

13. Verwendung einer Vorrichtung nach einem der Ansprüche 1-11, wobei, wenn die Hebestützen (20') in den oberen Positionen sind, das Plattenmaterial unter Verwendung geeigneter Fördermittel, wie etwa eines Greifers, eines Krans und/oder dergleichen, davon entfernt oder darin positioniert wird, wobei die Fördermittel das Plattenmaterial (C) über eine Dachöffnung und/oder eine Seitenöffnung einer Aufliegerabdeckung erreichen können.

14. Verwendung der Vorrichtung nach Anspruch 11, wobei die Abdeckung des Aufliegers mindestens teilweise entfernt wird, um es dem Plattenmaterial (C) zu ermöglichen, aus dem Auflieger (2) hinaus zu reichen.

15. Verfahren zum Transportieren von Floatglas unter Verwendung einer Transportvorrichtung nach einem der Ansprüche 1-11.

## Revendications

1. Appareil de transport pour transporter un matériau en feuille dans une position sensiblement verticale, le matériau en feuille étant du verre flotté, l'appareil comprenant au moins un espace de chargement (3) et un ou plusieurs supports (20') qui sont configurés pour supporter la face inférieure du matériau en feuille (C), **caractérisé par** les un ou plusieurs supports qui sont un ou plusieurs supports de levage (20') qui sont configurés pour déplacer le matériau en feuille (C) entre au moins une première position verticale et une seconde position verticale, la première position verticale étant une position de transport inférieure et la seconde position verticale étant une position de chargement / déchargement supérieure.

2. Appareil selon la revendication 1, dans lequel une partie inférieure du matériau en feuille (C) est positionnée au-dessous d'un niveau vertical (G) d'un plancher ordinaire d'espace de chargement (F) de l'espace de chargement, lorsque les supports de levage (20'), supportant la face inférieure du matériau en feuille (C), sont dans une position inférieure.

3. Appareil selon la revendication 1 ou 2, dans lequel une partie inférieure du matériau en feuille (C) est positionnée dans une position entre les parties de bâti de base de remorque, par exemple des barres de châssis, lorsque les supports de levage (20'), supportant la face inférieure du matériau en feuille (C), sont dans une position inférieure.

4. Appareil selon l'une quelconque des revendications précédentes, dans lequel les supports de levage (20') sont configurés pour lever le matériau en feuille (C) vers le haut.

5. Appareil selon l'une quelconque des revendications précédentes, dans lequel le mouvement sensiblement vertical des supports de levage (20') peut être obtenu par un ou plusieurs actionneurs hydrauliques, un mécanisme à broche entraîné par un ou plusieurs moteurs électriques ou par d'autres mécanismes de déplacement.

6. Appareil selon l'une quelconque des revendications précédentes, dans lequel une partie inférieure du chargement (C) est positionnée au niveau de ou au-dessus du niveau (G) d'un plancher ordinaire d'espace de chargement (F), par exemple au niveau de ou au-dessus d'un bâti de base de remorque, lorsque les supports de levage (20'), supportant la face inférieure du matériau en feuille (C), sont dans une position supérieure.

7. Appareil selon l'une quelconque des revendications précédentes, comprenant au moins un support de chargement (10) pour supporter le matériau en feuille dans l'espace de chargement (3), dans lequel les un ou plusieurs supports de levage (20') sont configurés pour supporter la face inférieure du matériau en feuille (C) lorsque ce matériau est au moins supporté au niveau de et/ou à proximité d'une position supérieure par ledit au moins un support de chargement (10).

8. Appareil selon la revendication 7, dans lequel le au moins un support de chargement (10) et les supports de levage (20') sont agencés pour maintenir le chargement en forme de feuille (C) sensiblement verticalement, de sorte qu'un côté supporté du chargement (C), qui est supporté par lesdits supports de chargement (10), enferme un angle α avec un plan horizontal dans la plage d'environ 80 - 90°.

9. Appareil selon l'une quelconque des revendications 7 à 8, dans lequel le au moins un support de chargement (10) est prévu avec des parties de support de chargement (21) qui permettent un mouvement sensiblement vertical, sensiblement sans friction ou avec une faible friction du matériau en feuille le long de son parcours vers le au moins un support de chargement (10).

10. Appareil selon l'une quelconque des revendications 7 à 9, dans lequel le au moins un support de chargement (10) est espacé d'une certaine distance verticale du niveau d'un plancher de l'espace de chargement, afin de supporter de manière stable le matériau en feuille dans une position relativement haute dans l'espace de chargement.

11. Appareil de transport selon l'une quelconque des revendications précédentes, comprenant une couverture qui est agencée pour recouvrir ledit espace de chargement, dans lequel la couverture est de préférence au moins partiellement amovible à la main par une seule personne.

12. Utilisation de l'appareil selon l'une quelconque des revendications 1 à 11, dans laquelle, lorsque les supports de levage (20') sont dans la position supérieure, le matériau en feuille (C) s'étend partiellement au-dessus d'un côté supérieur (T) de la remorque (2).

13. Utilisation de l'appareil selon l'une quelconque des revendications 1 à 11, dans laquelle, lorsque les supports de levage (20') sont dans les positions supérieures, le matériau en feuille est retiré de ces derniers ou positionnés à l'intérieur de ces derniers, en utilisant des moyens de transport appropriés, par exemple un appareil de préhension, une grue et/ou similaire, dans laquelle les moyens de transport peuvent atteindre le matériau en feuille (C) via une ouverture de toit et/ou une ouverture latérale d'une couverture de remorque.

14. Utilisation de l'appareil selon la revendication 11, dans laquelle la couverture de la remorque est au moins partiellement retirée pour permettre au matériau en feuille (C) atteindre la remorque (2).

15. Procédé pour transporter du verre flotté, en utilisant un appareil de transport selon l'une quelconque des revendications 1 à 11.
